# EUROPEAN PATENT SPECIFICATION

(11) **EP 3 186 790 B1**
(45) Date of publication and mention of the grant of the patent: **09.12.2026**
(21) Application number: 15836344.0
(22) Date of filing: 26.08.2015
(51) Int. Cl.: G07C 5/08, G07C 5/12, A01G 23/00

(54) **METHOD, ARRANGEMENT AND USER INTERFACE FOR PRESENTING DATA DESCRIBING FOREST WORK UNIT OPERATION**
VERFAHREN, ANORDNUNG UND BENUTZERSCHNITTSTELLE ZUR DARSTELLUNG VON DATEN ZUR BESCHREIBUNG DES BETRIEBS EINER WALDARBEITSEINHEIT
PROCÉDÉ, CONFIGURATION ET INTERFACE D'UTILISATEUR POUR PRÉSENTER DES DONNÉES DÉCRIVANT UNE OPÉRATION D'UNITÉ DE TRAVAUX FORESTIERS

(30) Priority: 27.08.2014 FI 20145742
(43) Date of publication of application: 05.07.2017
(73) Proprietor: Ponsse Oyj, 74200 Vieremä (FI)
(72) Inventor: SAVUOJA, Jani, 74200 Vieremä (FI); RANTA, Niko, 74200 Vieremä (FI); HILJANEN, Jarmo, 74200 Vieremä (FI)
(74) Representative: Kolster Oy Ab
(86) International application number: PCT/FI2015/050548
(87) International publication number: WO 2016/030576

(56) References cited:
- WO-A1-2011/064453
- US-A1- 2002 174 092
- US-A1- 2008 084 334
- US-A1- 2009 299 707
- US-A1- 2010 065 155
- US-A1- 2010 065 155
- US-A1- 2012 323 453
- US-A1- 2014 188 576
- UNKNOWN: "TIMBERMATIC 300 700 900 MEASURING, CONTROL AND COMMUNICATION SYSTEM CUT-TO-LENGTH SYSTEM", 31 May 2005 (2005-05-31), XP055462177, Retrieved from the Internet <URL:https://colheitademadeira.com.br/wp-content/uploads/publicacoes/246/Timbermatic%20Measuring%20and%20Control%20Systems.pdf> [retrieved on 20180322]

## Description

### Background

The invention relates to forest work units and, in particular, to a method and arrangement for presenting information describing forest work unit operation.

In what is known as cut-to-length logging, the timber logged from a forest is cut to timber pieces of a desired length already at the logging area. The effectiveness and cost efficiency of felling and cutting forest work units are influenced by a number of factors. Similar questions relate to the monitoring of the performance and cost efficiency of processes carried out by other kinds of forest work units, such as forwarders, and it is not at all always self-evident to the driver whether a work method is efficient from the point of view of productivity, energy consumption or other costs, for example.

Current solutions often make it difficult for the driver to monitor work efficiency sensorily. Sensory monitoring of the machine operation may even lead the operation to a wrong direction because although the running of an engine, for example, may sound efficient, in reality the engine perhaps could be used in a more economical way. Use of sensory methods for controlling efficiency of work performance is especially hampered by the large scale and complexity of modern systems. Mutually comparable work phases, such as similar handling of similar type of timber, do not necessarily take place one after the other but the type of timber may vary, which makes real efficiency difficult to monitor sensorily. Automation often plays a significant role in the whole and it, too, may complicate sensory observation and recognition of work efficiency. Attention may be drawn to wrong things, such as monitoring of single, easily observable key indicators, and an attempt to increase efficiency may, in the end, even lead to a decrease in efficiency. US 2010065155, for instance, discloses a method for monitoring the performance of a subsystem of a forest machine, comprising: collecting data relating to the function of the subsystem or the performing of the function; determining one or more characteristic values to describe the performance continually according to data; and monitoring the variation of said one or more characteristic values in time, wherein, for example, the variation of said one or more characteristic values in time is displayed in the form of a graphic presentation to the user. Another method for presenting information describing an operation of a forest work unit is known from WO2011/064453 A1.

### Summary of the invention

It is thus an object of the invention to provide a novel method and an arrangement implementing the method. The object of the invention is achieved by a method and arrangement which are characterised by what is disclosed in the independent claims 1 and 8. Preferred embodiments of the invention are disclosed in the dependent claims.

Some advantages are discussed in greater detail in connection with the detailed disclosure.

### List of figures

The invention is now described in closer detail in connection with preferred embodiments and with reference to the accompanying drawings, in which:
Figure 1 illustrates a method for presenting to the user information describing an operation of a forest work unit;
Figure 2 illustrates a method for presenting to the user information describing an operation of a forest work unit;
Figure 3 illustrates an arrangement for providing feedback to the user on an operation of a forest work unit;
Figure 4 illustrates a user interface;
Figure 5 illustrates a user interface;
Figure 6 illustrates yet another method for presenting to the user information describing an operation of a forest work unit; and
Figures 7a, 7b, 7c and 7d illustrate some embodiments of a user interface.

### Detailed description

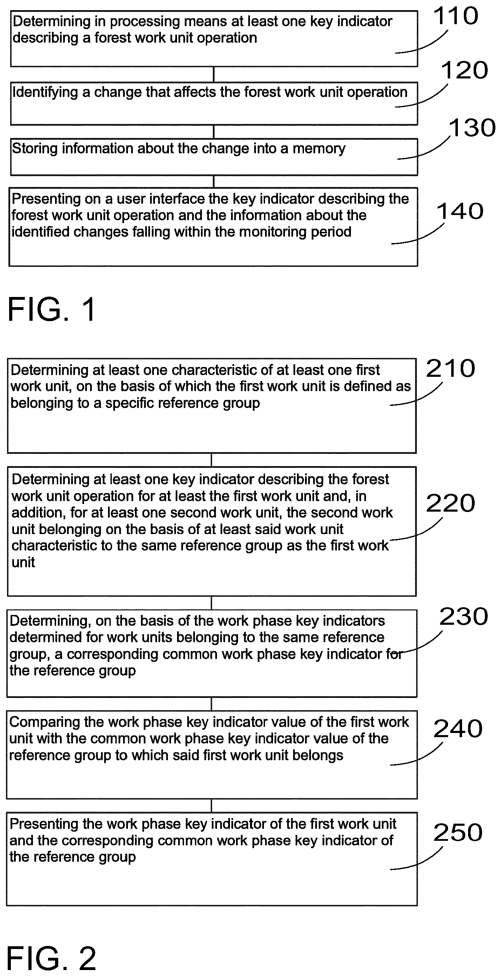

Figure 1 illustrates a method for presenting to the user information describing an operation of a forest work unit. The information describing the operation preferably illustrates the efficiency of the forest work unit, which may be measured, depending on the embodiment, by e.g. productivity gauges, energy efficiency meters, such as fuel flow meters, or time counters, such as work cycle time recorders. The information is presented to the user, who may be a forest work unit driver, forest entrepreneur, trainer or a similar user interested in the efficiency of the forest work unit.

In the method of Figure 1 at least one key indicator describing an operation of a forest work unit is determined 110 in a processing means 31. The key indicator may describe for example a measure indicating a continuously measurable operation of the work machine, such as fuel consumption, a measure indicating a work phase, such as work phase duration, or a measure associated with the handling efficiency of an individual unit to be handled, such as one stem, one load or one work site, e.g. fuel consumption per stem or load to be handled. Measures indicating the efficiency of work unit handling may then be further presented either at a work unit level or at a larger reference group level. The reference group concerned may comprise a number of work units. The group may be selected, or the user may select it, by applying any one of the manners described in connection with the embodiments disclosed. A predetermined work phase may be one of the following, for example: feed to butt, felling cut, feed start, feed, feed to target length, bucking, topping, run under load, run without load, loading and unloading. In an embodiment, the monitored work phase may also comprise a combination of two or more of these, usually successive, work phases, i.e. a total time required by two successive work phases may be measured, for example.

The work phase may be identified either automatically in the information system of the forest work unit, for example, or identification may be based on data input by the user on a change of work phase. In other words, a work phase may be identified in response to information received from the information system on a change of work phase and/or in response to data input by the user over user interface 33, for example, on the work phase change. Automated identification of a work phase may be based e.g. on the status data of the forest work unit, on data obtained from the sensors of the forest work unit or on other data on the basis of which the work phase may be identified automatically.

The key indicator indicating a work phase may be e.g. the duration of the work phase in seconds, for example, fuel consumption in litres, for example, per time unit, such as an hour, or per an amount of timber handled, such as a cubic meter or ton handled, or the output in cubic metres or tons per time unit or per an amount of fuel consumed.

In addition, the method includes identifying 120 a change affecting the operation of the forest work unit. Information about the change is stored 130 into a memory 32. The information on the change preferably comprises at least the point of time of the change in relation to a time or some other cumulative variable, such as transport distance, position, such as a map coordinate, the amount of fuel consumed or the cumulative number of work units handled, or surface area. Still more preferably the information on the change may also comprise other change data, such as the type of the change, the value of a changed setting before the change, the value of a changed setting after the change, a changed condition before the change, a changed condition after the change, a changed work method before the change and/or a changed work method after the change.

A change to be identified and stored is preferably a change that has an influence on the operation of the forest work unit. The change to be identified and stored may preferably be a change that is assumed to have on effect on the key indicators to be monitored or one whose effect on the key indicators to be monitored is to be analysed, i.e. it is possible to flag, so to speak, information collected on stems. It is thus possible to monitor direct or derived key indicators, such as stem-specific or load-specific values or representative values, such as averages, medians, fractiles, sums and/or other derived/computational values, before and after the change. The change in question may be a change related to the work site and/or working conditions, such as a change of work site or project, change of tree type, change of terrain, such as slopes in the working area, start or end of a pre-cleared area, or the effect of weather conditions on the work and the ground, a change in settings, such as a manual or automatic change of a machine setting, servicing, repair or maintenance of the forest work unit or a part thereof, for example servicing or replacement of a worn part, or a change in work methods, such as a change of driver, adoption of a different work method, or some other similar change.

On the other hand, the change may also be an indicative change, such as a change in a key indicator to be monitored, although the reason for the change had not been identified. In that case the key indicator may be given for example a control value, such as a target value, alarm value or some other threshold value, and the change may consist of reaching the target value or some other threshold value or an alarm value set for the key indicator, for example. Furthermore, an indicative change may be an identifiable trend in the key indicator being monitored, e.g. a predetermined number of successive decreasing or increasing key indicator values, or a dispersion deviating from the normal in the threshold values or the measurement values used for determining it. The identified and stored change may then be used afterwards, for example, to determine the cause of the change, even when the effect of the change to the operation of the forest work unit could not be anticipated. On the other hand, if the link between this kind of identified indicative change and the forest work unit operation is known in advance, the identified and stored change and the change data associated therewith may be utilized also for anticipating a service need of the forest work unit or its components, such as a need to replace a part that wears, such as a saw chain.

The change affecting the operation of the forest work unit may thus comprise at least one of the following: a change relating to the work site, change relating to working conditions, change in settings, servicing, repair or maintenance operation carried out on the forest work unit or a part thereof, change in working method and a change in a key indicator to be monitored, meaning that a predetermined target value or trend of the key indicator being monitored is achieved.

The change may be identified either automatically by means of the processing devices on the basis of the data collected by the information system of the forest work unit, for example, or the identification may be based on data input by the user on a change, i.e. the change may be identified in response to information received on the change from the information system of the forest work unit and/or in response to data input by the user on the change through the user interface 33, for example.

The user interface 33 may enable editing, deleting and adding changes and information relating to changes afterwards. Hence, in an embodiment, the user may also afterwards manually add, for example, through the user interface a flag to a desired point to indicate a change, i.e. store data on the change, at least the time of the change, at a later stage, for example when key indicators describing a work phase are being examined and/or after a subsequent change has already been stored. The user may then add missing information on the change that has remained unidentified and/or has not been entered, for example. In yet another embodiment, the user may afterwards add information to the change data, e.g. a more precise description of the event or the change that has been made. In yet another embodiment, through the user interface the user may edit stored changes, e.g. the point of a change in relation to a cumulative variable, such as a point of time, and/or change data associated with the change, and/or delete a stored change. The user may thus correct any incorrectly stored information or, for example, information distorting the determined key indicators due to exceptional factors. On the other hand, the user may use this adjustment of the changes, i.e. the "flags", to visually bracket on the user interface for example time ranges or other criteria with which the best or the worst key indicator values have been obtained for determining the factors that influence the forest work unit operation the most and for improving productivity of work.

When necessary, one or more key indicators describing a forest work unit operation, such as a work phase, may be re-determined. If one or more changes are added afterwards, they may have an effect on the key indicators and/or factor used to compute these, such as samples to be monitored or reference samples, e.g. stems, loads, stem groups or load groups, periods of time to be monitored and/or other reference and/or grouping criteria. This may require re-determining a key indicator or key indicators by regrouping the corresponding measurement values on the basis of the point of time and/or other reference criteria.

The effect of such changes may preferably be extrapolated to a period longer than the monitoring period, e.g. to an annual level, whereby the effect of a change e.g. on annual efficiency, amount of timber handled, fuel consumption, average price, output, costs or some other end result of interest may be evaluated. Then again, instead of or in addition to this, it is also possible to evaluate how economical or adaptable a specific change is in prevailing work site conditions. The effect of a change may also be extrapolated for a similar purpose to some other period of a cumulative variable longer than the monitoring period, such as a work shift, work site or the like.

In addition, in the method of Figure 1 a key indicator describing the operation of a forest work unit as a function of time and identified information on changes relating to the monitoring period are shown 140 in the user interface 33. The user is thus able to clearly see possible changes in work efficiency. The key indicator may be a direct key indicator, such as stem- or load-specific key indicator or a derived or computational key indicator, such as a representative value or an extrapolated value on annual level effects, for example. The effects of a change may thus be presented for a sufficiently long time span to make their economic and other effects easily understandable. For example, a difference of a second or some seconds in the handling time of an individual stem is not necessarily easy to discern, but by calculating its effect per hour or on the number of stems handled during a work shift, or in terms of euros during the work shift or time spent to complete the work site/working area, the effect of the change is significantly easier to understand. In other words, use of concrete and appropriate concepts and entities, either alone or together with absolute values, to present key indicators significantly facilitates evaluation of the effect of a change that has been carried out or taken place regarding work efficiency.

The key indicator may preferably be presented in the user interface 33 as a graph in which the key indicator is shown as a function of time or some other cumulative variable in the form of a line graph, area graph or histogram or some other diagram, and the changes are indicated (flagged) on the graph at a point on the axis representing the cumulative variable that corresponds to the time of the change. In an embodiment, when derived or computational key indicators in particular are presented, also computational comparison may always be restarted at the point of change in question. In other words, for example representative values, such as average values, medians, fractiles, sums or other derived/computational values, may be calculated separately in each case for key indicator values determined between two such points of change.

In an embodiment, manual and automatic changes as well as flags placed by the user may be displayed in different ways in the graph, e.g. with flags of different outer appearance or with other markings. In yet another embodiment, it is possible to display on the user interface, either continuously or by the user acting on the flag point on the user interface, the changes that have taken place at the flag.

Figure 2 shows a method for presenting to a user information describing the operation of a forest work unit, according to the claimed invention. Instead of the method of Figure 1, information describing the operation of the forest work unit and the key indicators representing the information are determined on the basis of a division into reference groups of the units subject to the forest work unit operations, which in this disclosure are referred to as work units. This division may be made dynamically on the basis of a group of units to be handled in each particular case, instead of a division based on predetermined categories. The processing means of the forest work unit may thus divide handled work units continuously, for example, into a predetermined number of reference groups, whereby the threshold values of the reference groups, i.e. the criteria on the basis of which a work unit belongs to a specific reference group, may change as the work proceeds. In other respects the method may correspond to the one shown in Figure 1.

In the invention of Figure 2, at least one characteristic of at least one first work unit is determined 210 in the processing means, the characteristic being then used as a basis for determining the work unit as belonging to a specific reference group. The invention of Figure 2 further includes determining 220 in the processing means at least one key indicator describing the operation of the forest work unit for the first work unit and, in addition, for at least one second work unit, the second work unit belonging at least on the basis of said work unit characteristic to the same reference group as the first work unit.

Further still, the invention of Figure 2 includes determining 230 in the processing means, on the basis of the key indicators describing a work phase and determined for work units belonging to the same reference group, a corresponding key indicator common to reference group and describing the work phase, and comparing 240 in the processing means the key indicator value describing the work phase of the first work unit with the value of the key indicator describing the work phase and common to the reference group to which the first work unit belongs. The method of Figure 2 still further includes presenting 250 on the user interface the key indicator describing the work phase of the first work unit and the corresponding key indicator describing the work phase common to the reference group.

In an embodiment, the method of Figure 2 may be implemented in addition to the method of Figure 1, in which case the key indicators according to the methods of Figure 1 and Figure 2 are presented separately as described in connection with the respective methods. The key indicators and their manner of representation according to the methods may be shown on a same user interface or on different user interfaces and either simultaneously or at partly or entirely different times. In an embodiment, one or more key indicators describing the operation of the forest work unit is presented on the user interface in accordance with the method of Figure 2, and when one user interface element representing the key indicator in question is acted on in the manner disclosed in connection with the description of the user interface, the corresponding key indicator may, in addition, be shown on the user interface, in accordance with the method of Figure 1. In a second embodiment, on the other hand, it is possible to combine the methods of Figures 1 and 2 to present one and the same key indicator. In that case the reference group used in the method of Figure 2 is restricted on the basis of the identified and stored changes presented in connection with the method of Figure 1. Hence the reference group may comprise the work units falling between two successive changes or between the start and finish of a work and/or a change that comes closest to these. In other words, in that case the characteristic that associates a work unit with a reference group may be its position in a predetermined manner before or after a specific change or between two changes affecting the operation of the forest work unit. Naturally, there may also be several characteristics associating a work unit with a reference group, i.e. reference group selection criteria, and thus when the work unit is a stem, for example, and the reference group is a stem group, the size category of the stem, in addition to the time of handling, may have an effect on which group of stems the stem in question belongs to.

A key indicator describing a work phase is one of the key indicators mentioned in connection with the description of Figure 1, for example.

The first work unit comprises one of the following: a stem, load, work site, first stem group, first load group and first work site group. Naturally, in that case the second work unit belonging to the same reference group is also of the same work unit type, i.e. comprises also one of the work unit types given in the above list. In an embodiment, the work unit may be a work unit being handled at the time of the determining or a work unit completed as regards the work phase monitored last.

The reference group comprises one of the following: a second stem group, second load group and second work site group. In that case, e.g. when the work unit is a stem and the second stem group is the reference group, the key indicator of the stem may be compared with that of the stem group. On the other hand, when the work unit is the first stem group, e.g. a group of stems handled within a shorter period of time, and the reference group is the second stem group, e.g. a group of stems handled within a longer period of time, the key indicator of the first stem group may be compared with a reference value of the second stem group.

In yet another embodiment, key indicators may be presented for two or more reference groups to which the work units are selected on partly or entirely mutually exclusive criteria. In other words, a first reference group may comprise entirely or partly different work units than a second reference group. In that case one and the same key indicator may be compared, for example, relative to a work shift before and after a break. This may be useful e.g. from the point of view of work and work shift planning, evaluation of the driver's alertness or for anticipating service, repair and maintenance operations for the forest work unit, for example. In particular, when large work units, such as work sites, are concerned, a yet another embodiment provides a possibility to correspondingly compare a work unit with another work unit belonging to the same reference group, i.e. with a work unit preferably similar with regard to at least some characteristic. This may be advantageous and reasonable when large work units are concerned, because accumulation of data required for forming a statistically significant representative value typically takes a lot of time.

In an embodiment, the forest work unit may be a felling and cutting forest work unit, such as a harvester or what is known as a combination machine, i.e. a combination of a harvester and a forwarder, and targets of the operations, i.e. the work units, may be stems to be handled, e.g. to be felled or cut.

In that case it is then possible to determine 210, similarly as in the method of Figure 2, in the processing means 31 at least one characteristic of at least one individual stem handled last or being handled at the moment of the determining, the stem being then determined as belonging to a specific group of stems on the basis of the characteristic. The characteristic may be at least one of the following or a combination of these: stem diameter at a predetermined height, tree type and stem volume. An individual stem handled last or being handled at the time of the determining refers to a stem that is being handled at the time the characteristic of the stem is being defined or to a stem the handling of which has been completed last. For the sake of clarity, the terms 'stem' and 'individual stem' are used in this disclosure to refer to a stem of the above type that is being handled at the time of the determining or that was handled last, unless the context clearly shows that the term has been used to mean something else.

The disclosed embodiment further includes determining 220 at least one key indicator in the processing means 31 to describe a predetermined work phase of the forest work unit with regard to said individual stem and, in addition, to at least one other individual stem, this other individual stem belonging, on the basis of at least said stem characteristic, to the same stem group as said individual stem. The predetermined work phase may be e.g. one of the following: feed to butt, felling cut, feed start, feed, feed to target length, bucking and topping.

A key indicator describing a work phase may be one of the key indicators mentioned in connection with the description of Figure 1, for example. In that case the key indicator describing the work phase may preferably be determined not only to an individual stem but also to all stems in the same stem group or to a predetermined sample of stems from the stem group. The same determining may naturally be repeated to all stem groups separately.

In an embodiment, it is further possible to identify a change affecting the operation of the forest work unit according to the method of Figure 1. Information about the change may be stored into the memory 32. Identification and storing of the information may be carried out as disclosed in connection with the embodiment of Figure 1.

In yet another embodiment it is possible to determine 230 in the processing means 31, on the basis of the key indicators describing a work phase determined for individual work units belonging to the same stem group, a corresponding a common work phase key indicator of the stem group. This common work phase key indicator may be a representative value of the key indicator describing the work phase, for example. In the different embodiments the representative value may be computed for an entire sample between two events of change, e.g. to a stem group, and/or the representative value may be computed as a rolling value in which a certain number of stems, loads, work cycles or similar objects of measurement are taken into account and/or the computation is re-started after each event of change. The representative value may be determined separately in each case from the beginning of the monitoring period to the first point of change, for the period between two successive times of change and from the last change in the monitoring period to the end of the period.

When a key indicator describing a work phase has been determined for an individual stem handled last or being handled at the time of the determining, and a corresponding common work phase key indicator of the stem group has also been determined, the key indicator of the individual stem may be compared with that of the stem group, more precisely with the key indicator of the stem group to which the individual stem belongs. It is thus possible in the method to compare 240, as shown in Figure 2, in the processing means 31 the value of said key indicator describing a work phase of an individual stem to a common value of a work phase key indicator of the stem group to which said individual stem belongs. An advantage of this solution is that the key indicator used in the comparison is as comparable as possible with the key indicator of the individual stem.

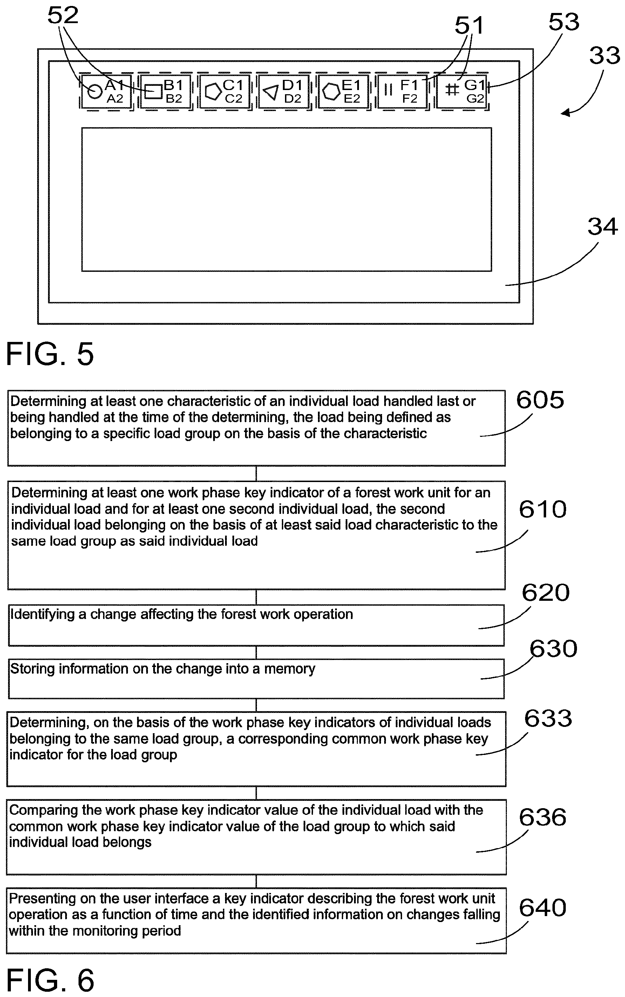

In yet another embodiment, a key indicator describing the operation of the forest work unit may be presented 250 in the user interface 33 with regard to a work unit, such as an individual stem, and a reference unit, such as a stem group. In an embodiment, it is also possible to present these key indicators as a function of time, or some other cumulative variable, and the identified information on changes relating to the monitoring period, similarly as in the method of Figure 1. This may be carried out in a manner corresponding to that disclosed in connection with the embodiment of Figure 1, for example. However, in connection with the method according to the embodiment of Figure 2, it is possible to present, instead of or in addition to the key indicator presented as a function of a cumulative variable, a key indicator describing a work phase of a work unit being handled and/or that was handled last and/or a corresponding key indicator describing a work phase and common to the reference group, depending on the embodiment. The user is thus able to clearly see possible changes in work efficiency. What is particularly advantageous is that the comparison is made with the driver's own previous comparable measurement data, and thus the effects of changes in settings, for example, are more clearly shown. In solutions in which the key indicators are compared with table values or to reference values of a larger and more heterogeneous sample, the number of factors influencing the key indicators grows so high that the effect of the changes made can no longer be made clear. As described in connection with the other embodiments, a corresponding method may also be applied to a forwarder, in which case the work unit and the reference group may naturally be different. On the other hand, Figure 6 and the disclosure related thereto show a method in which the forest work unit is a forwarder or a combination machine. The method is naturally correspondingly applicable to a harvester.

The reference group, i.e. one or more work units to be included in the reference group, and/or other data to be used for computing a key indicator may be selected in different ways in the different embodiments. The data may be determined on the basis of identified and stored changes. In that case the data to which a specific work unit belongs is determined by whether the work unit has been handled before or after a certain change. In other words, the work unit belongs to specific data because it has been handled between two specific changes, before the first change, or after the last change. However, the reference group and/or some other sample may also be determined on the basis of the characteristics of the work unit. For example, stems belonging to a particular size category, a load consisting of a specific type of timber, or a work site on a specific type of terrain may be included in a specific reference group or other data or be left out due to its characteristic.

In an embodiment, the reference group or other data used for determining the key indicator is determined automatically on the basis of one or more pre-determined criteria, such as identified and stored changes and/or at least one characteristic of a work unit. In addition to or instead of the above, the user may, in an embodiment, select a work unit or work units to be included in or excluded from the data by acting on the user interface and selecting by means of the user interface at least one criterion on the basis of which work units are selected for the data, such as a reference group, to be used for computing a key indicator. In other works, the method enables the user to apply the user interface so as to select at least one criterion for restricting the data to be used for determining a key indicator. The user may thus choose which characteristic or other factor will serve as the basis for including work units into or excluding them from a reference group and/or other data used for determining a key indicator. In an embodiment the user may, in addition to or instead of the above, also select individual work units for inclusion or exclusion. In that case the user excludes from the data e.g. exceptional or incorrect measurement results, such as a work phase time for a work phase interrupted by an external element or the measurement of which was significantly affected by an exceptional external element.

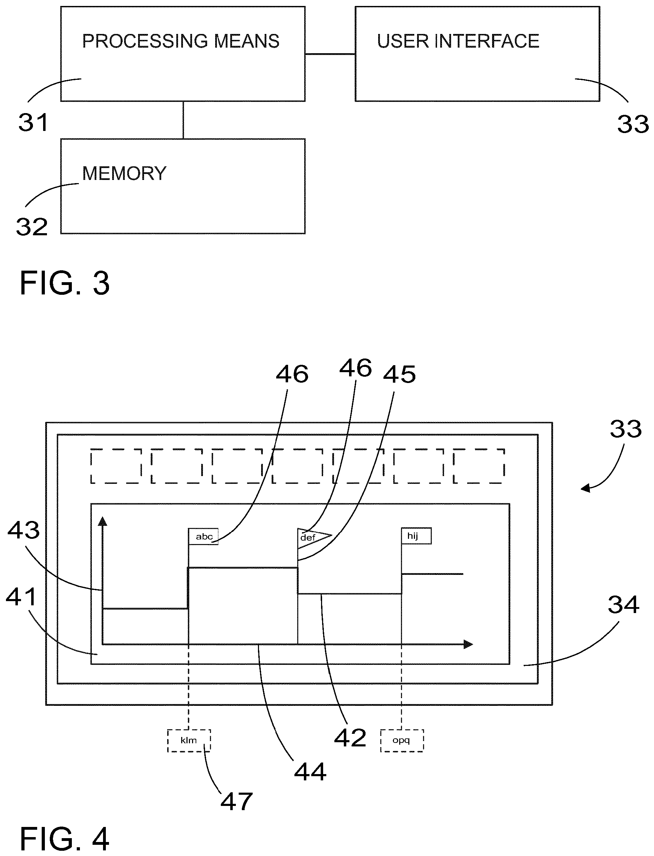

Figure 3 is a schematic view of an arrangement for providing feedback to the user on the operation of a forest work unit. The arrangement comprises at least processing means 31, memory 32 and user interface 33. With the arrangement, it is possible to implement at least the method of Figure 1 or some other method disclosed herein, e.g. any one of the methods disclosed in connection with Figures 1, 2 and/or 6 or a combination thereof, for providing feedback to the user on the operation of the forest work unit by configuring the processing means 31, the memory 32 and/or the user interface to carry out the described tasks/operations and/or method steps.

The processing means 31 may preferably comprise the processing means of the forest work unit, the memory 32 may comprise the memory of the forest work unit, and the user interface 33 may comprise the user interface of the forest work unit, and these may be either fixedly or removably arranged to the forest work unit or form a separate unit of their own, available for use in connection with the forest work unit, e.g. when arranged to a mobile device or a similar portable device. However, in an embodiment a similar arrangement may be provided, in addition to or instead of the above, to a separate unit that may be controlled at a distance from the forest work unit.

With regard the methods of Figures 1, 2 and 6, for example, the processing means 31 may be configured to at least determine at least one key indicator describing the operation of the forest work unit. In addition, in an embodiment it is possible to identify in the processing means 31 a change affecting the operation of the forest work unit. The identified change may be stored into the memory 32.

As regards the method of Figure 2, for example, the processing means 31 of the arrangement is configured to at least determine at least one characteristic of at least one first work unit, on the basis of which the work unit is then determined as belonging to a specific reference group, and at least one key indicator describing at least one predetermined work phase of the forest work unit for the first work unit and for at least one second work unit, the second work unit belonging to the same reference group as the first work unit at least on the basis of the work unit characteristic in question. The characteristic determining the reference group of a work unit may be determined e.g. by fetching from the memory 32 the feature data in question of the work unit concerned. Depending on the embodiment, the memory 32 may be a memory of the processing means 31 or an external memory, for example. The property data, in turn, may be based on information received from sensors, for example, or other sensing devices connected to the forest work unit or to property data of the work unit measured or collected in some other way. The criteria for belonging to a specific reference group may be based on for example pre-determined threshold values determined for a characteristic, such as maximum and minimum threshold values of the characteristic. In an embodiment the criteria defining a reference group or at least one such criterion may be formed by determining threshold values in a dynamic manner, e.g. by determining in advance that the work units to be handled, such as timber to be felled and cut, is divided into a pre-determined number of reference groups, such as stem groups. In yet another embodiment it is possible to determine in advance the number of work units for each reference group and the threshold values of each reference group may be determined dynamically on the basis of the characteristics of the individual work units and the number of work units in the reference group.

In addition, with regard to the method of Figure 2, for example, the processing means 31 is configured to determine, on the basis of the key indicators describing a work phase and determined for work units belonging to the same reference group, a corresponding key indicator describing the work phase and common to the reference group and to compare in the processing means the value of the key indicator describing the work phase of said work unit with the value of the key indicator describing the work phase common to the reference group to which the first work unit belongs.

The processing means 31 may comprise a programmable logic and/or programmable microprocessor, for example. In an embodiment, the processing means 31 may comprise an embedded information system which is known per se in advanced mobile work machines and between the different parts of which information is transferred via a data transmission bus known per se, for example a CAN (Controller Area Network) bus.

With regard to the method of Figures 1, 2 and 3, the user interface 33 may be correspondingly configured for example to present a key indicator describing the operation of the forest work machine and the information on identified changes relating to the monitoring period.

Furthermore, with regard to the method of Figure 2 and/or 3, the user interface 33 may be configured to present the key indicator describing the work phase of the work unit and the corresponding key indicator describing the work phase common to the reference group.

The user interface 33 may comprise e.g. a display 34 and/or different selection means 25, such as buttons, mouse, joystick and/or touch screen, with which the user may enter input to the information system. In the different embodiments, the arrangement may comprise a forest work unit, forest work simulator, or general-purpose computer.

Figure 4 shows a user interface 33. The user interface 33 may comprise at least a first user interface element 41, which is configured to display at least a graphic representation on the display 34. In the example of Figure 4, the graphic representation comprises a graph 42, such as the line graph as in the embodiment of Figure 4, in which a key indicator is presented on a first axis 42, i.e. the y-axis in Figure 4, and a cumulative variable, such as time in the embodiment of Figure 4, is presented on a second axis 44, such as the x-axis, changes being shown by indicator lines 45, such as vertical indicator lines, which are arranged at a point on the x-axis 44 corresponding to the occurrence of the change with respect to the cumulative variable. The graph presentation may differ between the different embodiments. The key indicator, which may be a direct or a derived/computational key indicator, may be alternatively presented on the x-axis and time on the y-axis, and/or the key indicator may be presented as an area graph or a bar diagram, for example. When a bar diagram is used as the display format of the graph, indicator lines for presenting changes may be replaced by indications of the points where the bars change.

Information about the change may be provided in connection with the indicator line 45 presenting the change. A flag pattern 46, for example, may be provided at the top or the bottom of the indicator line 45 presenting the change. The flag pattern 46 may comprise information about the change given in the form of text arranged to the flag pattern and/or by the outer appearance of the flag pattern 46. In other words, information about a change in the form of text may be provided in connection with the flag pattern 46, e.g. inside, next to, below or above the flag pattern 46. Instead of or in addition to this, information on changes may be shown by the outer appearance of the flag pattern 46, for example by selecting a flag pattern 46 with a different outer appearance in connection with different types of changes. The outer appearance of the flag pattern 46, which is determined on the basis of the type of the change, may in that case comprise e.g. the geometrical shape of the flag pattern 46, the colour of the flag pattern 46, the size of the flag pattern 46 and/or the format, colour and/or size of the text arranged in connection with the flag pattern 46. The type of change in question may be a source of change, such as a change in conditions, in the settings of the forest work unit or in working methods. On the other hand, the type may also be a method of identifying or storing the change, such as an automatically identified change or information stored by the user on the change. The changes stored by the user may further consist of different types of change, such as information entered by the user on the change at the time the change takes place or a change or information on a change added or edited afterwards. In some embodiments, an automatically identified change or one stored by the user to which the user adds something or which s/he edits in some way may also be considered as a separate change type. A geometrical shape may be a circle, triangle, square, rectangle, ellipse, polyhedron or some other appropriate and preferably easily distinguishable shape.

Information on a change in a text format may also be arranged in the form of a text into a separate information element 47, which may be arranged to the top or bottom of the indicator line 45 indicating the change, for example. If both the flag pattern 46 and the information element 47 are arranged in connection with the indicator line 45 representing a change, they may preferably be arranged to opposite ends of the indicator line representing the change. In an embodiment, the flag pattern 46 and the information element 47 may, on the other hand, be arranged close to one another, e.g. to the same end of the indicator line 45 or to the same side of the indicator line 45. Information on a change in the form of a text may comprise for example the time of the change or its relation to some other accumulative information as well as other change data, such as the type of the change, a forecast on the effect of the change on a period of a cumulative variable longer than the monitoring period. In yet another embodiment, more precise change data such those above, or some of them, may be arranged to be presented, in a manner known per se, only when the user acts on the indicator of the change, such as the indicator line 45, flag pattern 46 and/or information element 47, over the user interface. Acting on the indicator of the change may in that case comprise pointing the indicator of the change either directly or indirectly by means of a separate joystick and/or button, for example. More precise change data may be presented in a manner known per se for as long as the indicator of the change is acted on, for a predetermined time, or until the information is hidden by a predetermined control action, for example by reacting on the indicator of the change.

Figure 5 shows a user interface 33 that may be associated with the method of Figure 2, for example, and to an arrangement for implementing the method. In an embodiment, the user interface 33 may comprise at least two second user interface elements 51, each one of which is arranged to show one key indicator for the first work unit and, on the other hand, a corresponding key indicator for the reference group to which the work unit in question belongs. In Figure 5 each key indicator of the work unit is presented with references A1 to G1 and the corresponding key indicators of the reference group with references A2 to G2.

The user interface 33 may preferably be arranged to present a successful and a failed work unit with a key indicator of a different outer appearance, which makes it easy for the user to identify the failed work unit. The references A1 to G1 presenting the work unit key indicator may be shown e.g. with a different colour, in a different size, or the background colour of the other user interface element in question may be changed to indicate the failed work unit in an easily distinguishable manner. A failed work unit may be e.g. one whose key indicator, such as handling time, differs significantly from other values of the same key indicator of the work units belonging to the same reference group. In an embodiment it is possible to visually show good, bad and neutral key indicators by presenting them in different ways, for example by presenting in green the key indicator values that are good or to be hoped for, in red those that are not to be hoped for, and in white, for example, the normal values that are neutral. On the other hand, a key indicator or some other reference value of the reference group may be presented in a neutral colour that draws less attention, such as grey, which makes a work-unit-specific value that is essential for the monitoring stand out more clearly. Threshold values regarding desired and/or non-desired key indicator values, for example maximum and minimum limits of a desired key indicator value range, may be determined automatically on the basis of a previous information, for example, or a user, trainer or entrepreneur may set them manually over the user interface 33, for example.

The first user interface elements 41 and/or the second user interface elements 51 may be shown on the display. In an embodiment the user interface 33 may be configured to also display other information at the same time, e.g. information necessary for the use and operation of the forest work machine. In that case the second user interface elements 51 may preferably be arranged into a single group on the display 34, e.g. one after the other in a vertical or horizontal direction of the display. In the embodiment of Figure 5 the first user interface elements are arranged one after the other in a horizontal direction. For the sake of clarity, only some of the first user interface elements are numbered.

In an embodiment, each second user interface element may further comprise an identifier 52, such as a symbol, text or abbreviation, or a combination of these, that represents the key indicators presented by the second user interface element 51 concerned. If the key indicators comprise durations of different work phases, for example, each identifier 52 may represent the work phase in question, for example. In that case the user may easily and quickly see which work phase or other key indicator each second user interface element 51 represents.

In an embodiment, the user interface elements, such as the first user interface elements 41, the second user interface elements 51 and information and identifiers 52 related to these may be displayed by showing to the user the information s/he needs the most in each particular case. In practice this may mean for example that the user interface elements 41, 51 are displayed on and/or hidden from the display in response to e.g. each work phase, the start and/or end of a work phase, a forest work unit operation or the start or end of one, a control or other measure carried out by the user, or a choice made by the user over the user interface 33. The choice made by the user may relate directly to the user interface elements 41, 51 being displayed, i.e. the user may choose which user interface elements 41, 51 are displayed and which not in each case, or the choice may relate to some other selection made by the user, such a selection of a forest work unit operation or a work phase.

In an embodiment, the user interface 33 may be configured to change the graph on the display 34 in response to the user acting on a selection means corresponding to one key indicator. This selection means may preferably be a touch screen, for example, in which case the selection may be made on the same display 34 that is used for presenting the first user interface elements. It is thus possible to determine on the display 34 of the user interface 33 areas 53 corresponding to the second user interface elements, for example, as selection means. In that case the user interface 33 may be configured to show, for example in the form of the graphical representation described in connection with Figure 4, the key indicator that is presented on the first user interface element an area of which the user is acting on. In Figure 5 the areas 53 corresponding to the second user interface elements shown with broken lines are slightly larger than the second user interface elements 51, although in the different embodiments they may be exactly the same size as or smaller than the user interface element 51. The graph may present e.g. a key indicator value, its average or its moving average as a function of time or some other cumulative variable, preferably for a work shift in question or for some other predetermined or selectable period of time. The period in question may be one work shift, 3 months or 12 months, for example. On the other hand, in another embodiment, the graphical representation may present a key indicator determined on the basis of the work units of the reference group or other selected data relating to a time period as values divided by the changes, i.e., instead of presenting a value as a function of time, the value of the key indicator for each period between the changes is presented. The period of time for which the key indicator is presented may be determined in advance or the user may select the period with the user interface.

Figure 6 shows yet another method for presenting to the user information describing the operation of the forest work unit. In this embodiment the forest work unit is a loading and forwarding forest work unit, such as a forwarder or what is known as a combination machine, i.e. a harvester and a forwarder combined. The work units being monitored are loads to be formed and transported, and the reference groups, correspondingly, are load groups. In other respects the method may substantially correspond to those of Figures 1 and 2.

In the method of Figure 6 at least one characteristic of a load handled last or being handled at the time of the determining is determined 605 in the processing means 31, and on the basis of it the load is determined to belong to a specific load group. This characteristic may be at least one of the following or a combination of these: load size in cubic metres, load size in tons, work site or working area from which the load is collected, and work shift. A single load handled last or being handled at the time of the determining is the load that is being handled at the time the load characteristic is being determined or the load whose handling was completed last. Load handling may include work planning, run under load, run without load, loading and/or unloading. For the sake of clarity, the terms 'load' and 'single load' are used in this disclosure to refer to this type of load handled last or being handled at the time of the determining, unless it clearly appears from the context that the terms are used to mean something else.

The disclosed method further includes determining 610 in the processing means 31 at least one key indicator describing a predetermined work phase of the forest work unit for said single load and, in addition, for at least one other single load, the other single load belonging, at least on the basis of said load characteristic, to the same load group as said single load. The predetermined work phase may be one of the following, for example: work planning, run without load, run under load, loading and/or unloading.

The key indicator describing the work phase may be one of the key indicators mentioned in connection with the disclosure relating to Figure 1, for example. In that case the key indicator describing the work phase may preferably be determined not only for the single load but also for all loads in the same load group or for a predetermined sample of loads from the load group. Naturally, the same determining may be repeated for all load groups separately.

The method further includes identifying 620 a change affecting the operation of the forest work unit. Information about the change is stored 630 into the memory 32. Identification and storing of the information may be carried out as disclosed in connection with the embodiment of Figure 1.

The method still further includes determining 633 in the processing means 31, on the basis of the key indicators describing the work phase and determined for the single loads in the same load group, a corresponding key indicator common to the load group and describing the work phase. This common work phase key indicator may be a representative value of the key indicator describing the work phase, for example. In the different embodiments the representative value may be computed for a sample between two change events, e.g. load groups, and/or the representative value may be computed as a rolling value in which a predetermined number of stems, loads, work cycles or similar objects of measurement are taken into account and/or computation is re-started after each change event. The representative value may be determined separately in each case from the beginning of the monitoring period to the time of the first change, between each successive times of change and from the last change to the end of the monitoring period.

When the work phase key indicator has been determined for a single load handled last or being handled at the time of the determining and a corresponding common work phase key indicator of the load group has also been determined, the key indicator of the single load may be compared with the key indicator of the load group, more specifically to the key indicator of the load group to which the single load belongs. In other words, the method involves comparing 636 in the processing means 31 the key indicator value describing the work phase of said single load with the common work phase key indicator value of the load group to which said single load belongs. An advantage of this solution is that the key indicator used in the comparison is as well comparable as possible with the key indicator of the single load.

Moreover, the solution includes presenting 640 in the user interface 33 a key indicator for the operation of the forest work unit as a function of time and identified information of changes relating to the monitoring period. This may be implemented in a similar manner as in connection with the embodiment of Figure 1 or Figure 2, except that the unit to be handled is a load, instead of a single load.

In the embodiment of Figure 6 the indicator describing a work phase may be load discharge time, for example, which may be influenced by work planning and load structure, for example, or load collection and/or transport time, which may be influenced by planning of collection. In that case the identified change may e.g. a change in working technique, working method or a change in the time spent on load planning.

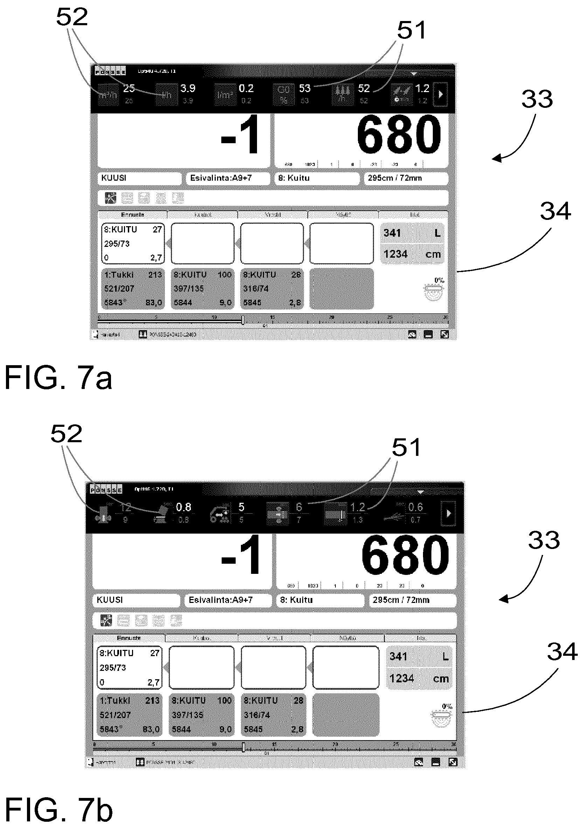

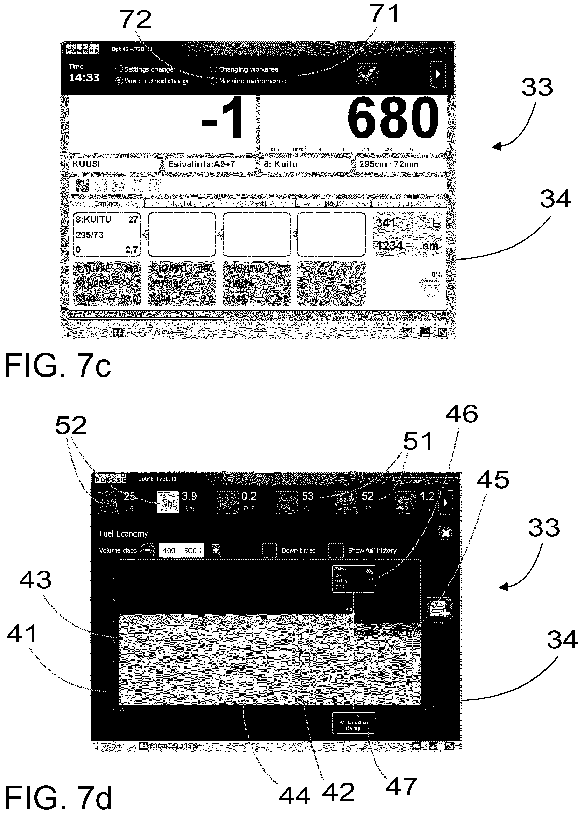

Figures 7a, 7b, 7c and 7d illustrate some embodiments of the user interface in connection with a harvester or a combination machine. Figure 7a shows a user interface 33 which may be associated with the method of Figure 2 and the arrangement implementing the method, for example. The user interface comprises second user interface elements 51, which are each arranged to represent one key indicator describing the operation of the forest work unit. In the embodiment of Figure 7a the identifiers 52 comprise a symbol, text or abbreviation in each case or a combination of these representing each key indicator. The user interface 33 in Figure 7b corresponds to that shown in Figure 7a, except that instead of general key indicators describing the operation of the forest work unit, Figure 7b shows key indicators relating to a work unit that is an individual stem. The embodiments of Figures 7a and 7b show a black stripe to which the second user interface elements 51 are arranged and which may comprise the method of Figure 2 and the user interface formed by a corresponding arrangement, for example. Rest of the user interface shown in Figures 7a and 7b may be configured to present other information and/or graphs needed in the forest work unit operation and in different work phases. In an embodiment the second user interface elements 51 may be shown only when a work phase or other circumstances render it possible for the user to follow the key indicators describing the operation of the forest work unit.

Figure 7c shows a user interface 33 that comprises a third user interface element 71, which in turn comprises selection means 72 and by acting on these the user may make selections affecting changes, determination of key indicators or method of presentation, or store information relating to these. In the embodiment of Figure 7c the user may act on the third user interface element 71 and, with the help of the selection means 72, select a change type in order to store the change and the information relating to it.

Figure 7d shows the user interface 33 having second user interface elements 51 arranged to a first part thereof, i.e. to the top in Figure 7d, which may correspond to the second user interface elements 51 of Figure 7a, for example, as in Figure 7d, or the second user interface elements 51 of Figure 7b. The user interface 33 may comprise a functionality which shows, as the user is acting on an area 53 corresponding to a specific second user interface element 51, which is not defined with borders or numbered in Figure 7d, a first user interface element 41, which is not defined with borders in Figure 7d, in the second part of the user interface 33, i.e. the bottom part of Figure 7d, the element corresponding to a corresponding key indicator and being implemented in accordance with the method of Figure 1 and a corresponding arrangement. In that case the first user interface element 41 may correspond to the first user interface elements 41 described in connection with Figure 4 and/or elsewhere in this disclosure and/or to graphs or indicators depicting the operation of the forest work unit. The embodiments of Figures 7a to 7d are disclosed as some embodiments in connection with a harvester or a combination machine, although naturally corresponding user interface applications may be implemented with at least partly different key indicators also in connection with forwarders.

In an embodiment, at least one of the following may be presented as a key indicator of a reference group or in addition to it: a comparison with the first key indicator values of a monitoring period, such as a work shift, a comparison with the first key indicator values after a change, and a comparison with the last preceding key indicator values.

In an embodiment the stems that significantly differ from the average value by their diameter, for example, may be left out of the stem group determinations altogether and ignored when key indicators for stem groups are being determined. Also work units of other types may be subject to similar elimination. In that case, the comparison can always be made with the reference group specific to the work unit, while other factors affecting the key indicator except for those of interest in the comparison can be efficiently minimised, which enhances the usefulness of the analysis.

In an embodiment, the reference value, such as a key indicator of a stem group or some other reference group, for example, may be presented only when a sufficiently representative information set has been collected for it, e.g. a predetermined minimum number of work units belonging to the reference group. In an embodiment, a second user interface element 51 that monitors a reference value, such as a stem group key indicator, determined on the basis of a collected representative data set, may be presented with a different appearance by changing the background colour of the user interface element, for example. In an embodiment, the background colour of first user interface elements of this type may be changed to an alert colour, such as yellow.

In an embodiment, there are several different modes of presentation to be selected from in the user interface, and the second user interface elements, for example, may be visible only in one or some of the presentation mode alternatives. Changing the mode of presentation may be arranged to take place in response to a change in a work phase, for example, or the user may select the mode of presentation s/he wishes to use by acting on the user interface.

In an embodiment, the user interface 33 may be configured to display a plural number of different alternative graphic and/or text- or figure-based presentations, such as graphs, tables, or the like. The user interface 33 may be configured to change the information to be presented and/or their mode of presentation in response to the user acting on at least one area of the display 34 corresponding to at least one second user interface element 51 and/or a display area corresponding to a text- and figure-based presentation or on some other predetermined user interface selection element, such as a separate icon for change of presentation. Then, such a presentation may for instance comprise a graphic representation as described above, and as the user acts on the second user interface element or the graphic representation or, to be more precise, to a display area or some other selection means corresponding to one of these, the information to be presented or its mode of presentation is changed. The same information may be presented in a more detailed table format, for example, and/or a flag pattern or some other sign depicting an identified and stored change and any notes relating to the change and/or the effects of the change or other information about the change may be displayed. In an embodiment, the user interface 33 may be configured to change the graphic and/or text- or figure-based presentation in an automated response to a change in a work phase, for example.

In an embodiment, the processing means and the user interface may be configured to evaluate what may cause a change in at least one key indicator. This is particularly advantageous when reasons for a particularly desired or non-desired operation of the forest work unit are analysed. In other words, the arrangement may be arranged to determine at least one source of malfunction at least on the basis of the key indicator values. Preferably, also other measurement and analysis data collected by the processing means may be used in the determining. In an embodiment, the processing means may be further configured to automatically adjust the operation of the forest work unit for fixing a problem that may occur and for guiding the key indicator towards a more desired value.

In an embodiment, the method, arrangement and/or user interface may be arranged to evaluate the state of alertness of the driver. The arrangement may be arranged, for example, to identify a decrease of output, weakening of at least one key indicator and/or some other trend taking place in the key indicator although no changes which might be expected to have an effect on the output or the key indicator have occurred in the settings, conditions, working methods or other registered changes of the forest work unit. The arrangement may thus be arranged to identify a possible decline in the driver's alertness in response to the weakening of at least one key indicator or a variable derived from it, such as output, when no changes affecting the key indicator have been stored and identified. For example, extended work phase times or some other decline in work productivity may be due to a drop in the driver's alertness, for example. This may be presented in the user interface for example by showing the reference values of a previous or the last reference group, by changing the outer appearance, such as colouring or size, of the user interface elements 41, 51, for example, or by displaying to the user a warning of a declining trend. It is thus possible to guide the user to pay attention e.g. to pauses in work, sufficient periods of rest and work planning so that a good level of productivity is maintained.

In yet another embodiment the method, arrangement and user interface disclosed herein may be utilized for identifying service, repair or maintenance measures of the forest work unit. Hence a declining trend in the duration of a specific work phase or in a specific key indicator describing the quality produced by a work phase may indicate a need for repair, servicing or maintenance, such as a wearing of a part that wears. The part may thus need to be replaced or serviced. A declining trend may be presented to the user in a manner corresponding to that described in connection with the embodiment relating to the driver's alertness, for example. Consequently, the driver may be guided to carry out servicing work in time, before the productivity or quality of the forest work unit operations is significantly affected, and/or to perform the maintenance operations at a suitable time with regard to the operation, for example.

In an embodiment, the arrangement may be connected to an external network service of the forest work unit over a wireless network connection, for example. Information may then be transferred in one or two directions, depending on the embodiment. Information on key indicators, characteristics, changes and/or analyses, for example, may be transferred and stored into a network server and/or the network server may be searched for reference values to these information types. In yet another embodiment, data from the arrangement may be transferred over a wireless connection to a wireless mobile device, which enables a business owner or a foreman to monitor the operation of one or more forest work units over a remote connection from wherever s/he is.

The disclosed solution enables immediate and real-time feedback to be provided to an operator of forest work unit with regard to the efficiency of the phases of the forest work unit e.g. in view of costs and time spent as well as the effectiveness of the influence of changes that have been carried out or occurred, such as changes in timber type or terrain and, on the other hand, changes made in settings or operations. The comparison and/or feedback to be provided may be targeted more precisely on the desired elements, because the comparison is made using a comparable sample, i.e. a predetermined stem group, and the most useful method of comparison may be selected in each case. The solution enables disadvantageous operation to be brought up rapidly and lucidly, and thus comparison is more effective. Hence better productivity is achievable when the most effective and economic working methods are selected on the basis of facts obtained through understanding and clearly observing the effect of changes in settings in the operation of the forest work unit. Due to the clear, immediate and visual feedback the solution also enhances the driver's independent learning experience. Moreover, the solution enables the best method of presenting information to be selected in each case.

Use of processing means, such as a programmable logic or a programmable microprocessor, facilitates the monitoring of the work efficiency of state-of-art, often complex and complicated work cycles. In addition, with the processing means it is possible e.g. to improve the processing of groupings that improve the comparability of variables and results that are more difficult to compare and to present the groups in a format that is easier and quicker for the user to understand. For example, differences of some seconds or fractions of second in the duration of a work phase or performance are difficult to observe sensorily, but when the work phase or performance is repeated numerous times during a work shift and a year, for example, the differences may have a significant impact on work efficiency. Furthermore, often work phases and/or performances that are to be mutually compared do not occur one after the other but some other type of output may occur in between, such as stems of different sizes whose measurement values are not mutually comparable.

On the other hand, the type of method, arrangement and user interface disclosed here may also be used for pin-pointing as good reference groups as possible. In other words, instead of storing information on a real change affecting the operation of a forest work unit, a corresponding functionality may be used to influence the selection and grouping of work units and reference groups. Information about changes, change data and/or corresponding flags may thus be transferred in purpose in order to find as good key indicator values as possible for work units and/or reference groups. When work unit and/or reference group thresholds, i.e. points of change, that produce the best key indicator values or values exceeding predetermined criteria are found and the selection criteria are such that the key indicator values are sufficiently good or the best within a sample, it is possible to examine e.g. the settings, conditions, identified and stored changes relating to the forest work unit and/or other factors affecting its operation. It is then possible to find combinations of settings or other key indicators or combinations of adjustment settings suitable for specific conditions, for example, which enable a desired operation of the forest work unit or operation as close to the desired as possible.

## Claims

1. A method for presenting information describing an operation of a forest work unit, the method comprising at least the following steps:
determining (210) in processing means (31) at least one characteristic of at least one first work unit subject to the forest work unit operations on the basis of which the first work unit is determined as belonging to a specific reference group,
determining (220) in the processing means (31) at least one key indicator describing a forest work unit operation for said first work unit and, in addition, at least one second work unit subject to the forest work unit operations, the second work unit belonging at least on the basis of the characteristic of said second work unit to the same reference group as said first work unit,
determining (230) in the processing means (31), on the basis of the key indicators describing a work phase and determined for the work units belonging to the same reference group, a corresponding key indicator common to the reference group and describing the work phase,
comparing (240) in the processing means (31) the value of the key indicator describing the work phase of said first work unit with the value of the key indicator describing the work phase and common to the reference group to which said first work unit belongs, and
presenting (250) in the user interface (33) said key indicator describing the work phase of said first work unit and the corresponding key indicator common to the reference group and describing the work phase,
wherein the key indicator indicating the work phase is a duration of the work phase in seconds, fuel consumption in litres per time unit or per an amount of timber handled, or the output in cubic metres or tons per time unit or per an amount of fuel consumed,
wherein the first work unit and the second work unit further comprise one of the following: a stem, load, work site, first stem group, first load group and first work site group, and
wherein the reference group comprises one of the following: a second stem group, second load group and second work site group.

2. A method as claimed in claim 1, further comprising automatically determining in the processing means (31) data to be used for determining the key indicator on the basis of at least one predetermined criterion.

3. A method as claimed in claim 2, wherein a user selects with the user interface (33) at least one criterion for restricting the data to be used for determining the key indicator.

4. A method as claimed in any one of claims 1 to 3, further comprising generating at least one criterion determining the reference group by determining threshold values in a dynamic manner by determining in advance that the work units to be handled by the forest work unit are divided into a predetermined number of reference groups or that each reference group is to comprise a predetermined number of work units to be handled by the forest work unit.

5. A method as claimed in any one of claims 1 to 5, wherein a predetermined work phase is one of the following: feed to butt, felling cut, feed start, feed, feed to target length, bucking, topping, run under load, run without load, loading and unloading.

6. A method as claimed in any one of claims 1 to 5, wherein the work unit is at least one individual stem handled last or being handled at the moment of the determining, and wherein the characteristic is at least one of the following or a combination of these: stem diameter at a predetermined height, tree type and stem volume.

7. A method as claimed in any one of claims 1 to 5, wherein the work unit is a single load handled last or being handled at the time of the determining, and wherein the characteristic is at least one of the following of a combination of these: load size in cubic meters, load size in tons, work site or working area from which the load is collected, and work shift.

8. An arrangement for presenting information describing an operation of a forest work unit, the arrangement comprising at least a memory (32) of the forest work unit; a user interface (33);
processing means (31) of the forest work unit, which are configured to at least:
determine (31) at least one characteristic of at least one first work unit subject to the forest work unit operations on the basis of which the first work unit is determined as belonging to a specific reference group,
determine (220) at least one key indicator describing a forest work unit operation for said first work unit and, in addition, at least one second work unit subject to the forest work unit operations, the second work unit belonging at least on the basis of the characteristic of said second work unit to the same reference group as said first work unit,
determine (230), on the basis of the key indicators describing a work phase and determined for the work units belonging to the same reference group, a corresponding key indicator common to the reference group and describing the work phase,
compare (240) the value of the key indicator describing the work phase of said first work unit with the value of the key indicator describing the work phase and common to the reference group to which said first work unit belongs, and
present (250) in the user interface (33) said key indicator describing the work phase of said first work unit and the corresponding key indicator common to the reference group and describing the work phase,
wherein the key indicator indicating the work phase is a duration of the work phase in seconds, fuel consumption in litres per time unit or per an amount of timber handled, or the output in cubic metres or tons per time unit or per an amount of fuel consumed,
wherein the first work unit and the second work unit further comprise one of the following: a stem, load, work site, first stem group, first load group and first work site group, and
wherein the reference group comprises one of the following: a second stem group, second load group and second work site group.

9. An arrangement as claimed in claim 8, wherein a predetermined work phase is one of the following: feed to butt, felling cut, feed start, feed, feed to target length, bucking, topping, run under load, run without load, loading and unloading.

10. An arrangement as claimed in claim 8 or 9, wherein the work unit is at least one individual stem handled last or being handled at the moment of the determining, and wherein the characteristic is at least one of the following or a combination of these: stem diameter at a predetermined height, tree type and stem volume.

11. An arrangement as claimed in claim 8 or 9, wherein the work unit is a single load handled last or being handled at the time of the determining, and wherein the characteristic is at least one of the following of a combination of these: load size in cubic meters, load size in tons, work site or working area from which the load is collected, and work shift.

12. An arrangement as claimed in any one of claims 8 to 11, wherein the user interface (33) comprises at least a display (34) and at least one selection means (25).

## Patentansprüche

1. Verfahren zur Darstellung von Informationen, die den Betrieb einer Forstarbeitseinheit beschreiben, wobei das Verfahren mindestens die folgenden Schritte umfasst:
Bestimmen (210) mindestens einer Eigenschaft mindestens einer ersten Arbeitseinheit, die den Arbeitsvorgängen der Forstarbeitseinheit unterliegt, auf deren Grundlage die erste Arbeitseinheit als zu einer bestimmten Referenzgruppe gehörend bestimmt wird, in einer Verarbeitungseinrichtung (31),
Bestimmen (220) mindestens eines Schlüsselindikators, der einen Arbeitsvorgang einer Forstarbeitseinheit für die erste Arbeitseinheit beschreibt, und zusätzlich mindestens einer zweiten Arbeitseinheit, die den Arbeitsvorgängen der Forstarbeitseinheit unterliegt, wobei die zweite Arbeitseinheit mindestens auf der Grundlage der Eigenschaft der zweiten Arbeitseinheit derselben Referenzgruppe angehört wie die erste Arbeitseinheit, in der Verarbeitungseinrichtung (31),
Bestimmen (230) eines entsprechenden, der Referenzgruppe gemeinsamen und die Arbeitsphase beschreibenden Schlüsselindikators auf der Grundlage der Schlüsselindikatoren, die eine Arbeitsphase beschreiben und für die zur selben Referenzgruppe gehörenden Arbeitseinheiten bestimmt wurden, in der Verarbeitungseinrichtung (31),
Vergleichen (240) des Werts des Schlüsselindikators, der die Arbeitsphase der ersten Arbeitseinheit beschreibt, mit dem Wert des Schlüsselindikators, der die Arbeitsphase beschreibt und der der Referenzgruppe gemeinsam ist, zu der die erste Arbeitseinheit gehört, in der Verarbeitungseinrichtung (31), und
Anzeigen (250) des Schlüsselindikators, der die Arbeitsphase der ersten Arbeitseinheit beschreibt, und des entsprechenden Schlüsselindikators, der der Referenzgruppe gemeinsam ist und die Arbeitsphase beschreibt, in der Benutzeroberfläche (33)
wobei der Schlüsselindikator, der die Arbeitsphase angibt, die Dauer der Arbeitsphase in Sekunden, der Kraftstoffverbrauch in Litern pro Zeiteinheit oder pro bearbeiteter Holzmenge oder die Leistung in Kubikmetern oder Tonnen pro Zeiteinheit oder pro verbrauchter Kraftstoffmenge ist,
wobei die erste Arbeitseinheit und die zweite Arbeitseinheit weiter eines von Folgendem umfassen: einen Stamm, eine Ladung, einen Einsatzort, eine erste Stammgruppe, eine erste Ladungsgruppe und eine erste Einsatzortgruppe, und
wobei die Referenzgruppe eines von Folgendem umfasst: eine zweite Stammgruppe, eine zweite Ladungsgruppe und eine zweite Einsatzortgruppe.

2. Verfahren nach Anspruch 1, weiter umfassend das automatische Bestimmen von Daten in der Verarbeitungseinrichtung (31), die zur Bestimmung des Schlüsselindikators verwendet werden sollen, auf der Grundlage mindestens eines vorgegebenen Kriteriums.

3. Verfahren nach Anspruch 2, wobei ein Benutzer über die Benutzeroberfläche (33) mindestens ein Kriterium auswählt, um die Daten einzugrenzen, die zur Bestimmung des Schlüsselindikators verwendet werden sollen.

4. Verfahren nach einem der Ansprüche 1 bis 3, weiter umfassend das Generieren mindestens eines Kriteriums zur Bestimmung der Referenzgruppe durch die dynamische Bestimmung von Schwellenwerten, indem im Voraus bestimmt wird, dass die von der Forstarbeitseinheit zu bearbeitenden Arbeitseinheiten in eine vorbestimmte Anzahl von Referenzgruppen unterteilt sind oder dass jede Referenzgruppe eine vorbestimmte Anzahl von Arbeitseinheiten umfassen soll, die von der Forstarbeitseinheit zu bearbeiten sind.

5. Verfahren nach einem der Ansprüche 1 bis 5, wobei eine vorbestimmte Arbeitsphase eines von Folgendem ist: Vorschub bis zum Stoß, Fällschnitt, Vorschubstart, Vorschub, Vorschub bis zur Solllänge, Abblängen, Zopfen, Fahrt unter Last, Fahrt ohne Last, Be- und Entladen.

6. Verfahren nach einem der Ansprüche 1 bis 5, wobei es sich bei der Arbeitseinheit um mindestens einen einzelnen Stamm handelt, der zuletzt bearbeitet wurde oder zum Zeitpunkt der Bestimmung bearbeitet wird, und wobei es sich bei der Eigenschaft um mindestens eines von Folgendem oder eine Kombination davon handelt: Stammdurchmesser in einer vorgegebenen Höhe, Baumart und Stammvolumen.

7. Verfahren nach einem der Ansprüche 1 bis 5, wobei es sich bei der Arbeitseinheit um eine einzelne Ladung handelt, die zuletzt bearbeitet wurde oder zum Zeitpunkt der Bestimmung bearbeitet wird, und wobei es sich bei der Eigenschaft um mindestens eines von Folgendem von einer Kombination davon handelt: Ladungsgröße in Kubikmetern, Ladungsgröße in Tonnen, Einsatzort oder Arbeitsbereich, an dem die Ladung abgeholt wird, und Arbeitsschicht.

8. Anordnung zur Darstellung von Informationen, die den Betrieb einer Forstarbeitseinheit beschreiben, wobei die Anordnung mindestens einen Speicher (32) der Forstarbeitseinheit; eine Benutzeroberfläche (33);
eine Verarbeitungseinrichtung (31) der Forstarbeitseinheit umfasst, die mindestens zu Folgendem konfiguriert ist:
Bestimmen (31) mindestens einer Eigenschaft mindestens einer ersten Arbeitseinheit, die den Arbeitsvorgängen der Forstarbeitseinheit unterliegt, auf deren Grundlage die erste Arbeitseinheit als zu einer bestimmten Referenzgruppe gehörend bestimmt wird,
Bestimmen (220) mindestens eines Schlüsselindikators, der einen Arbeitsvorgang einer Forstarbeitseinheit für die erste Arbeitseinheit beschreibt, und zusätzlich mindestens einer zweiten Arbeitseinheit, die den Arbeitsvorgängen der Forstarbeitseinheit unterliegt, wobei die zweite Arbeitseinheit mindestens auf der Grundlage der Eigenschaft der zweiten Arbeitseinheit derselben Referenzgruppe angehört wie die erste Arbeitseinheit,
Bestimmen (230) eines entsprechenden, der Referenzgruppe gemeinsamen und die Arbeitsphase beschreibenden Schlüsselindikators auf der Grundlage der Schlüsselindikatoren, die eine Arbeitsphase beschreiben und für die zur selben Referenzgruppe gehörenden Arbeitseinheiten bestimmt wurden,
Vergleichen (240) des Werts des Schlüsselindikators, der die Arbeitsphase der ersten Arbeitseinheit beschreibt, mit dem Wert des Schlüsselindikators, der die Arbeitsphase beschreibt und der der Referenzgruppe gemeinsam ist, zu der die erste Arbeitseinheit gehört, und
Anzeigen (250) in der Benutzeroberfläche (33) des Schlüsselindikators, der die Arbeitsphase der ersten Arbeitseinheit beschreibt, und des entsprechenden Schlüsselindikators, der der Referenzgruppe gemeinsam ist und die Arbeitsphase beschreibt,
wobei der Schlüsselindikator, der die Arbeitsphase angibt, die Dauer der Arbeitsphase in Sekunden, der Kraftstoffverbrauch in Litern pro Zeiteinheit oder pro verarbeiteter Holzmenge oder die Leistung in Kubikmetern oder Tonnen pro Zeiteinheit oder pro verbrauchter Kraftstoffmenge ist,
wobei die erste Arbeitseinheit und die zweite Arbeitseinheit weiter eines von Folgendem umfassen: einen Stamm, eine Ladung, einen Einsatzort, eine erste Stammgruppe, eine erste Ladungsgruppe und eine erste Einsatzortgruppe, und
wobei die Referenzgruppe eines von Folgendem umfasst: eine zweite Stammgruppe, eine zweite Ladungsgruppe und eine zweite Einsatzortgruppe.

9. Anordnung nach Anspruch 8, wobei eine vorbestimmte Arbeitsphase eines von Folgendem ist: Vorschub bis zum Stoß, Fällschnitt, Vorschubstart, Vorschub, Vorschub bis zur Solllänge, Abblängen, Zopfen, Fahrt unter Last, Fahrt ohne Last, Be-und Entladen.

10. Anordnung nach Anspruch 8 oder 9, wobei es sich bei der Arbeitseinheit um mindestens einen einzelnen Stamm handelt, der zuletzt bearbeitet wurde oder zum Zeitpunkt der Bestimmung bearbeitet wird, und wobei es sich bei der Eigenschaft um mindestens eines von Folgendem oder eine Kombination davon handelt: Stammdurchmesser in einer vorgegebenen Höhe, Baumart und Stammvolumen.

11. Anordnung nach Anspruch 8 oder 9, wobei es sich bei der Arbeitseinheit um eine einzelne Ladung handelt, die zuletzt bearbeitet wurde oder zum Zeitpunkt der Bestimmung bearbeitet wird, und wobei es sich bei der Eigenschaft um mindestens eines von Folgendem von einer Kombination davon handelt: Ladungsgröße in Kubikmetern, Ladungsgröße in Tonnen, Einsatzort oder Arbeitsbereich, an dem die Ladung abgeholt wird, und Arbeitsschicht.

12. Anordnung nach einem der Ansprüche 8 bis 11, wobei die Benutzeroberfläche (33) mindestens ein Display (34) und mindestens ein Auswahlmittel (25) umfasst.

## Revendications

1. Procédé pour présenter des informations décrivant une opération d'une unité de travaux forestiers, le procédé comprenant au moins les étapes suivantes :
la détermination (210), dans des moyens de traitement (31), d'au moins une caractéristique d'au moins une première unité de travail soumise aux opérations d'unité de travaux forestiers, sur la base de laquelle la première unité de travail est déterminée comme appartenant à un groupe de référence spécifique,
la détermination (220), dans les moyens de traitement (31), d'au moins un indicateur clé décrivant une opération d'unité de travaux forestiers pour ladite première unité de travail et, en outre, au moins une deuxième unité de travail soumise aux opérations d'unité de travaux forestiers, la deuxième unité de travail appartenant, au moins sur la base de la caractéristique de ladite deuxième unité de travail, au même groupe de référence que ladite première unité de travail,
la détermination (230), dans les moyens de traitement (31), sur la base des indicateurs clés décrivant une phase de travail et déterminés pour les unités de travail appartenant au même groupe de référence, d'un indicateur clé correspondant commun au groupe de référence et décrivant la phase de travail,
la comparaison (240), dans les moyens de traitement (31), de la valeur de l'indicateur clé décrivant la phase de travail de ladite première unité de travail à la valeur de l'indicateur clé décrivant la phase de travail et commun au groupe de référence auquel ladite première unité de travail appartient, et
la présentation (250), dans l'interface d'utilisateur (33), dudit indicateur clé décrivant la phase de travail de ladite première unité de travail et de l'indicateur clé correspondant commun au groupe de référence et décrivant la phase de travail,
dans lequel l'indicateur clé indiquant la phase de travail est une durée de la phase de travail en secondes, une consommation de carburant en litres par unité de temps ou selon une quantité de bois manipulée, ou le rendement en mètres cubes ou en tonnes par unité de temps ou selon une quantité de carburant consommée,
dans lequel la première unité de travail et la deuxième unité de travail comprennent en outre l'un des éléments suivants : une tige, une charge, un chantier, un premier groupe de tiges, un premier groupe de charges et un premier groupe de chantiers, et
dans lequel le groupe de référence comprend l'un des éléments suivants : un deuxième groupe de tiges, un deuxième groupe de charges et un deuxième groupe de chantiers.

2. Procédé selon la revendication 1, comprenant en outre la détermination automatique, dans les moyens de traitement (31), de données devant être utilisées pour déterminer l'indicateur clé sur la base d'au moins un critère prédéterminé.

3. Procédé selon la revendication 2, dans lequel un utilisateur sélectionne, au moyen de l'interface d'utilisateur (33), au moins un critère pour restreindre les données devant être utilisées pour déterminer l'indicateur clé.

4. Procédé selon l'une quelconque des revendications 1 à 3, comprenant en outre la génération d'au moins un critère déterminant le groupe de référence en déterminant des valeurs seuils de manière dynamique en déterminant à l'avance que les unités de travail devant être manipulées par l'unité de travaux forestiers sont divisées en un nombre prédéterminé de groupes de référence ou que chaque groupe de référence doit comprendre un nombre prédéterminé d'unités de travail devant être manipulées par l'unité de travaux forestiers.

5. Procédé selon l'une quelconque des revendications 1 à 5, dans lequel une phase de travail prédéterminée est l'une des suivantes : alimentation par le gros bout, coupe d'abattage, démarrage de l'alimentation, alimentation, alimentation jusqu'à la longueur cible, tronçonnage, écimage, déplacement sous charge, déplacement à vide, chargement et déchargement.

6. Procédé selon l'une quelconque des revendications 1 à 5, dans lequel l'unité de travail est au moins une tige individuelle manipulée en dernier ou en cours de manipulation au moment de la détermination, et dans lequel la caractéristique est au moins l'une des suivantes ou une combinaison de celles-ci : diamètre de tige à une hauteur prédéterminée, type d'arbre et volume de tige.

7. Procédé selon l'une quelconque des revendications 1 à 5, dans lequel l'unité de travail est une charge unique manipulée en dernier ou en cours de manipulation au moment de la détermination, et dans lequel la caractéristique est au moins l'une des suivantes d'une combinaison de celles-ci : taille de charge en mètres cubes, taille de charge en tonnes, chantier ou zone de travail à partir desquels la charge est collectée, et quart de travail.

8. Configuration pour présenter des informations décrivant une opération d'une unité de travaux forestiers, la configuration comprenant au moins une mémoire (32) de l'unité de travaux forestiers ; une interface d'utilisateur (33) ;
des moyens de traitement (31) de l'unité de travaux forestiers, qui sont configurés pour au moins :
déterminer (31) au moins une caractéristique d'au moins une première unité de travail soumise aux opérations d'unité de travaux forestiers, sur la base de laquelle la première unité de travail est déterminée comme appartenant à un groupe de référence spécifique,
déterminer (220) au moins un indicateur clé décrivant une opération d'unité de travaux forestiers pour ladite première unité de travail et, en outre, au moins une deuxième unité de travail soumise aux opérations d'unité de travaux forestiers, la deuxième unité de travail appartenant, au moins sur la base de la caractéristique de ladite deuxième unité de travail, au même groupe de référence que ladite première unité de travail,
déterminer (230), sur la base des indicateurs clés décrivant une phase de travail et déterminés pour les unités de travail appartenant au même groupe de référence, un indicateur clé correspondant commun au groupe de référence et décrivant la phase de travail,
comparer (240) la valeur de l'indicateur clé décrivant la phase de travail de ladite première unité de travail à la valeur de l'indicateur clé décrivant la phase de travail et commun au groupe de référence auquel ladite première unité de travail appartient, et
présenter (250), dans l'interface d'utilisateur (33), ledit indicateur clé décrivant la phase de travail de ladite première unité de travail et l'indicateur clé correspondant commun au groupe de référence et décrivant la phase de travail,
dans laquelle l'indicateur clé indiquant la phase de travail est une durée de la phase de travail en secondes, une consommation de carburant en litres par unité de temps ou selon une quantité de bois traitée, ou le rendement en mètres cubes ou en tonnes par unité de temps ou selon une quantité de carburant consommée,
dans laquelle la première unité de travail et la deuxième unité de travail comprennent en outre l'un des éléments suivants : une tige, une charge, un chantier, un premier groupe de tiges, un premier groupe de charges et un premier groupe de chantiers, et
dans laquelle le groupe de référence comprend l'un des éléments suivants : un deuxième groupe de tiges, un deuxième groupe de charges et un deuxième groupe de chantiers.

9. Configuration selon la revendication 8, dans laquelle une phase de travail prédéterminée est l'une des suivantes : alimentation par le gros bout, coupe d'abattage, démarrage de l'alimentation, alimentation, alimentation jusqu'à la longueur cible, tronçonnage, écimage, déplacement sous charge, déplacement à vide, chargement et déchargement.

10. Configuration selon la revendication 8 ou la revendication 9, dans laquelle l'unité de travail est au moins une tige individuelle manipulée en dernier ou en cours de manipulation au moment de la détermination, et dans laquelle la caractéristique est au moins l'une des suivantes ou une combinaison de celles-ci : diamètre de tige à une hauteur prédéterminée, type d'arbre et volume de tige.

11. Configuration selon la revendication 8 ou la revendication 9, dans laquelle l'unité de travail est une charge unique manipulée en dernier ou en cours de manipulation au moment de la détermination, et dans laquelle la caractéristique est au moins l'une des suivantes d'une combinaison de celles-ci : taille de charge en mètres cubes, taille de charge en tonnes, chantier ou zone de travail à partir desquels la charge est collectée, et quart de travail.

12. Configuration selon l'une quelconque des revendications 8 à 11, dans laquelle l'interface d'utilisateur (33) comprend au moins une unité d'affichage (34) et au moins un moyen de sélection (25).
